# EUROPEAN PATENT SPECIFICATION

(11) **EP 0 536 772 B1**
(45) Date of publication and mention of the grant of the patent: **06.09.1995**
(21) Application number: 92117294.6
(22) Date of filing: 09.10.1992
(51) Int. Cl.: B62D 35/00

(54) **Fastening device for a streamlined roof housing of an industrial vehicle cab**
Befestigungsvorrichtung für ein stromliniertes Dachelement eines Fahrerhauses eines Nutzfahrzeuges
Dispositif de fixation pour un élément de toit profilé d'une cabine de camion

(30) Priority: 11.10.1991 IT TO910251 U
(43) Date of publication of application: 14.04.1993
(73) Proprietor: IVECO FIAT S.p.A., 10156 Torino (IT)
(72) Inventor: Benazzato, Giovanni, I-10093 Collegno (IT); Savio, Piero, I-10040 Borgaretto (IT)
(74) Representative: Jorio, Paolo, Dr. Ing.

(56) References cited:
- DE-A- 2 617 980
- FR-A- 2 482 037
- PATENT ABSTRACTS OF JAPAN vol. 015, no. 437 (M-1176)7 November 1991 & JP-A-3 182 885 (MITSUBISHI) 8 August 1991

## Description

The present invention relates to a fastening device for securing a streamlined roof housing to the roof of an industrial vehicle cab.

Known fastening devices of the aforementioned type usually present a number of rigid, e.g. screw and nut, fastening elements fitted inside seats around the edge of the roof housing, which also presents a peripheral portion mating with and sealable to a corresponding portion of the cab roof.

A major drawback of fastening devices of the aforementioned type is the short working life of the seal, due to the thermal and elastic strain on the two mating structures, and which invariably requires frequent servicing and repair.

It is an object of the present invention to provide a highly straightforward fastening device designed to overcome the aforementioned drawback typically associated with known devices.

According to the present invention, there is provided a fastening device for securing a streamlined roof housing to the roof of an industrial vehicle cab, whereby said roof housing comprises a base frame having a substantially peripheral portion designed to rest on a a sealing strip provided between said facing peripheral portions; corresponding portion of said roof; and a number of fastening elements are provided for a respective number of pairs of seats, each pair comprising a seat in said frame and a seat in said roof; characterized by the fact that each said fastening element is a screw and nut type, housed inside a pad of elastomeric material fitted inside one of said pair of seats.

A preferred non-limiting embodiment of the present invention will be described by way of example with reference to the accompanying drawings, in which:
Fig.1 shows a partial side view of an industrial vehicle cab fitted with a streamlined roof housing incorporating the fastening device according to the present invention;
Fig.2 shows a top plan view of the roof housing;

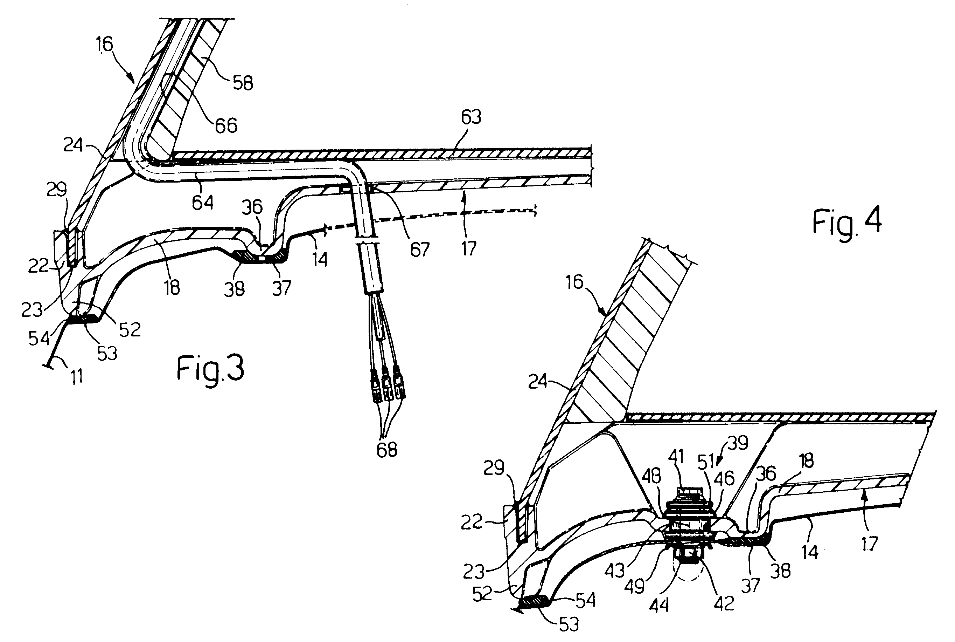

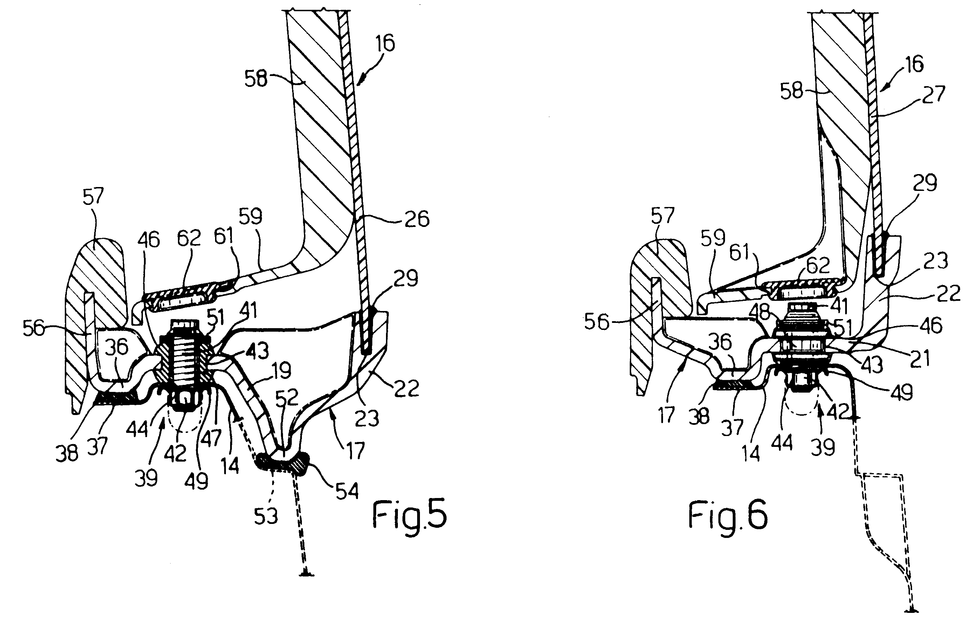

Fig.3 shows an enlarged section along line III-III in Fig.2;
Fig.4 shows an enlarged section along line IV-IV in Fig.2;
Fig.s 5 and 6 show respective enlarged sections along lines V-V and VI-VI in Fig.2.

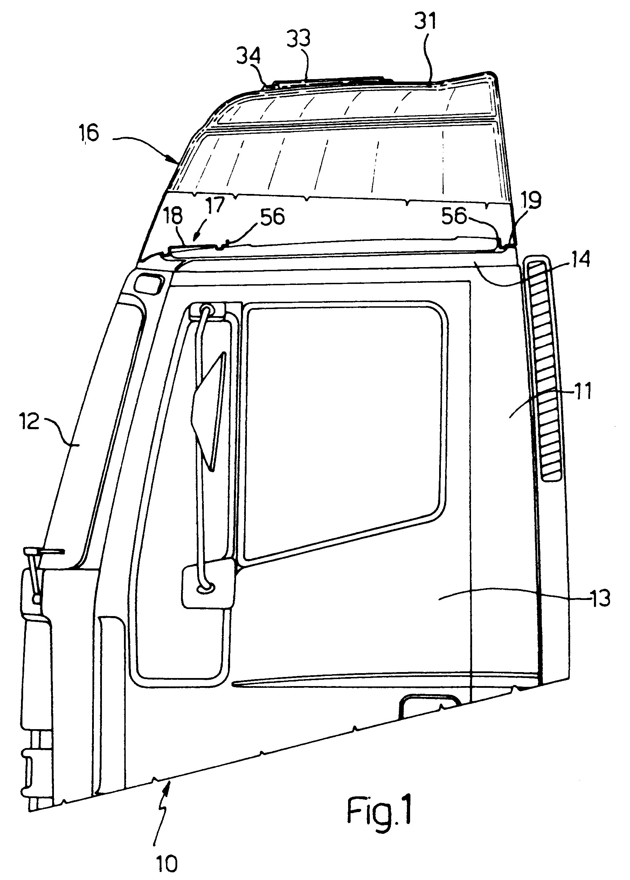

Number 10 in Fig.1 indicates an industrial vehicle cab comprising a metal structure 11 supporting a windshield 12 and doors 13, and in turn comprising a shaped roof 14 which may be provided in known manner with a roof hatch.

Roof 14 of cab 10 is normally fitted with a streamlined roof housing 16 for reducing drag of the vehicle body, and which may be used for storage, in which case it must be weatherproof-sealed, or, if sufficiently high, as a sleeping quarter for the driver.

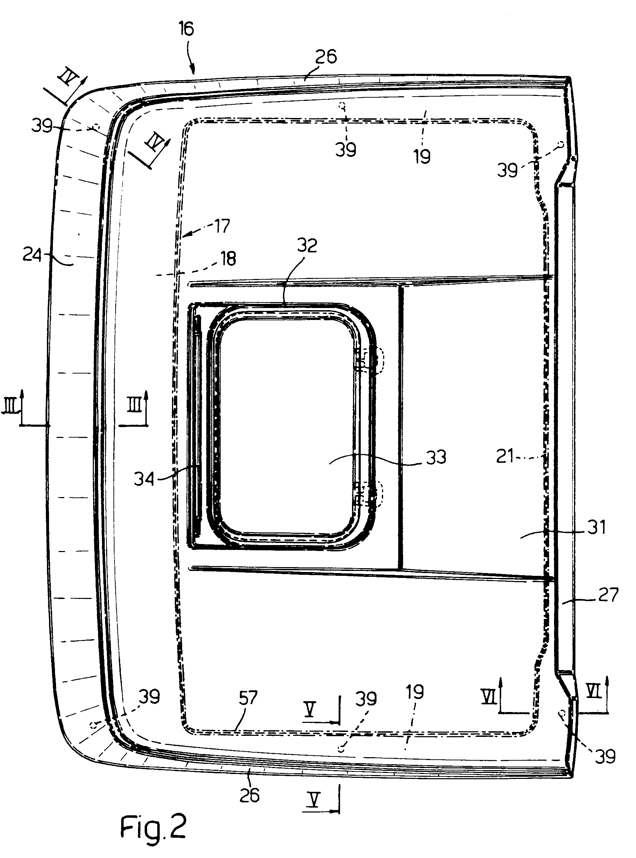

Housing 16 comprises a substantially rectangular base frame 17 made of strong, rigid plastic material, and comprising (Fig.2) a front side 18, two longitudinal sides 19, and a rear side 21. Each side 18, 19, 21 presents a variously-shaped section, as described in detail later on, and, more specifically, a substantially vertical, or almost vertical, outer edge 22 (Fig.s 3-6) terminating in a groove 23.

Grooves 23 along front side 18, longitudinal sides 19 and rear side 21 respectively house the steeply inclined front wall 24 of housing 16, the two lateral walls 26 streamlined to front wall 24, and the substantially vertical rear wall 27. Walls 24, 26 and 27 of housing 16 are sealed into respective grooves 23 by means of adhesive 29.

Walls 24, 26 and 27 are molded from plastic material and streamlined to, and formed in one piece with, the roof 31 (Fig.s 1 and 2) of housing 16. Roof 31 presents a substantially rectangular opening 32 closed by a hatch 33 hinged on the front side 34.

As shown in Fig.s 3 to 6, each side 18, 19 and 21 of frame 17 presents a substantially peripheral portion 36 designed to rest on a corresponding peripheral portion 37 of roof 14 of cab 10, and which is sealed on to portion 37 by a strip 38 of polyurethane rubber designed to adapt to the thermal and mechanical strain on portions 36 and 37.

Frame 17 is connected to roof 14 by a number of screw and nut type fastening elements 39 (Fig. 2). More specifically, provision is made for six elements 39 located substantially along longitudinal sides 19 of frame 17, and outwards in relation to portion 36. As shown in Fig.s 4 to 6, each element 39 presents a screw 41 and a nut 42, and is housed inside a respective pair of seats or holes 43 and 44 formed respectively in frame 17 and roof 14, outwards in relation to peripheral portions 36 and 37.

According to the present invention, each fastening element 39 is housed in a pad 46 of elastomeric material fitted inside hole 43 in frame 17. Pad 46 is barrel-shaped, and presents a coaxial insert in the form of a metal bush 47; and a diametrical groove 48 perpendicular to the axis of pad 46 and engaging the circular edge of hole 43.

At each hole 44, on the underside of roof 14, nut 42 of fastening element 39 is welded by means of a welded reinforcing plate 49; and screw 41 of fastening element 39 is inserted inside bush 47 via the interposition of a washer 51. When screwed inside nut 42, screw 41 therefore provides for flexibly connecting frame 17 to roof 14.

On front side 18 and longitudinal sides 19, frame 17 also presents a projecting edge 52 located outwards in relation to holes 43, and resting on a respective peripheral shoulder 53 of roof 14, via the interposition of a seal 54 of elastomeric material. Seal 54 provides for evenly distributing the weight of housing 16 on roof 14, and for weatherproofing both the fastening element 39 and sealing strip 38 regions.

Frame 17 terminates internally in a vertical edge 56 (Fig.s 5 and 6) fitted with a padded, e.g. polyurethane foam, handrail 57; and walls 24, 26 and 27 of housing 16 are lined with a substantially rigid layer 58 of finish material, e.g. soundproofing and insulating material. Along walls 26 and 27, layer 58 presents a flange 59 facing inwards of housing 16, and substantially covering respective sides 19 and 21 of frame 17 (Fig.2) and so concealing fastening elements 39.

For enabling access to screws 41 (Fig.s 5 and 6), flange 59 presents a number of holes 61 aligned with holes 43 in frame 17, and each fitted with a removable plug 62.

Housing 16 also presents a horizontal floor comprising a finish surface 63 (Fig.s 3 and 4), and may be fitted with utilities, such as lighting, for which purpose an electric cable 64 may be housed in a raceway 66 inside layer 58 of one of the housing walls, e.g. front wall 24. Frame 17 presents a hole 67 through which to connect the terminals 68 of cable 64 to the electric system in cab 10.

The advantage of the fastening device according to the present invention will be clear from the foregoing description. More specifically, flexible pad 46 provides for readily absorbing any in-service expansion or vibration of housing 16 and so safeguarding the sealing efficiency of strip 38.

To those skilled in the art it will be clear that changes may be made to the fastening device as described and illustrated herein without, however, departing from the scope of the present invention. For example, pad 46 may be other than barrel-shaped, and fitted inside hole 44 in roof 14 as opposed to hole 43 in frame 17.

## Claims

1. A fastening device for securing a streamlined roof housing to the roof of an industrial vehicle cab, whereby said roof housing (16) comprises a base frame (17) having a substantially peripheral portion (36) designed to rest on a corresponding portion (37) of said roof (14); a sealing strip (38) provided between said facing peripheral portions (36, 37); and a number of fastening elements (39) are provided for a respective number of pairs of seats (43, 44), each pair comprising a seat (43) in said frame (17) and a seat (44) in said roof (14); characterized by the fact that each said fastening element (39) is a screw (41) and nut (42) type, housed inside a pad (46) of elastomeric material fitted inside one (43) of said pair of seats (43, 44).

2. A device as claimed in Claim 1, characterized by the fact that each said pair of seats consists of two holes (43, 44); and each said pad (46) is barrel-shaped, and presents an insert (47) in the form of a metal bush coaxial with said pad (46) and housing said screw (41) of said fastening element (39).

3. A device as claimed in Claim 2, characterized by the fact that said pad (46) presents a diametrical groove (48) perpendicular to the axis of said bush (47) and engaging the circular edge of one of said holes (43, 44).

4. A device as claimed in Claim 3, characterized by the fact that said hole (43) engaged by said pad (46) is formed in said frame (17); said nut (42) of each said fastening element (39) being fitted to the mating hole (44) in said roof (14).

5. A device as claimed in one of the foregoing Claims, wherein said frame (17) comprises at least a front side (18) and two longitudinal sides (19); characterized by the fact that each said side (18, 19) comprises a projecting edge (52) resting on a shoulder (53) of said roof (14) via the interposition of a seal (54) of elastomeric material.

6. A device as claimed in Claim 5, characterized by the fact that said seats (43) are formed in said frame (17) between said portion (36) and said edge (52).

7. A device as claimed in Claim 6, wherein said roof housing (16) comprises a respective wall (24, 26, 27) for each side (18, 19, 21) of said frame (17); characterized by the fact that said walls (24, 26, 27) are lined with a layer (58) of covering material; said layer (58) comprising a flange (59) so shaped as to cover said fastening elements (39); and said flange (59) having a number of openings (61) enabling access to said fastening elements (39), and each closed by a respective removable plug (62).

8. A device as claimed in Claim 7, wherein said housing (16) presents a hatch (33); characterized by the fact that said frame (17) presents at least one hole (67) for the passage of cables (64) for the utilities provided in said housing (16); said cables (64) being at least partially housed in a conduit (66) between one (24) of said walls and the respective cover layer (58).

## Patentansprüche

1. Befestigungsvorrichtung zum Befestigen eines stromlinienförmigen Dachgehäuses auf dem Dach eines Fahrerhauses eines Nutzfahrzeuges, wobei das Dachgehäuse (16) einen Grundrahmen (17) mit einem im wesentlichen umfangsseitigen Abschnitt (36) aufweist, der derart ausgelegt ist, daß er auf einem entsprechenden Abschnitt (37) des Daches (14) aufliegt; wobei ein Dichtstreifen (38) zwischen den gegenüberliegenden umfangsseitigen Abschnitten (36, 38) vorgesehen ist und eine Anzahl von Befestigungselementen (39), für eine entsprechende Anzahl an Sitzpaaren (43, 44) vorgesehen sind, wobei jedes Paar einen Sitz (43) in dem Rahmen (17) und einen Sitz (44) in dem Dach (14) aufweist;
dadurch **gekennzeichnet**, daß
jedes Befestigungselement (39) vom Schrauben- (41) und Mutter (42)-Typ ist, und in einer Einlage (46) aus Elastomermaterial aufgenommen ist, die in eines (43) der Sitzpaare (43, 44) eingepaßt ist.

2. Vorrichtung nach Anspruch 1,
dadurch **gekennzeichnet**, daß
jedes Sitzpaar aus zwei Öffnungen (43, 44) besteht;
und daß jede Einlage (46) tonnenförmig ausgebildet ist und einen Einsatz (47) in Form einer Metallhülse aufweist, der koaxial zu der Einlage (46) verläuft und die Schraube (41) des Befestigungselementes (39) aufnimmt.

3. Vorrichtung nach Anspruch 2,
dadurch **gekennzeichnet,** daß
die Einlage (46) eine diametrale Nut (48) aufweist, die senkrecht zur Achse der Hülse (47) verläuft und mit der ringförmigen Kante einer der Öffnungen (43, 44) in Eingriff steht.

4. Vorrichtung nach Anspruch 3,
dadurch **gekennzeichnet,** daß
die Öffnung (43), mit der die Einlage (46) in Eingriff steht, in dem Rahmen (17) ausgebildet ist;
daß die Mutter (42) jedes Befestigungselementes (39) in die passende Öffnung (44) in dem Dach (14) eingepaßt ist.

5. Vorrichtung nach einem der vorstehenden Ansprüche, wobei der Rahmen (17) mindestens eine Vorderseite (18) und zwei Längsseiten (19) aufweist;
dadurch **gekennzeichnet,** daß
jede Seite (18, 19) eine vorstehende Kante (52) aufweist, die auf einem Absatz (53) des Daches (14) über eine dazwischenliegende Dichtung (54) aus Elastomermaterial ruht.

6. Vorrichtung nach Anspruch 5,
dadurch **gekennzeichnet,** daß
die Sitze (43) in dem Rahmen (17) zwischen dem Abschnitt (36) und der Kante (52) ausgebildet sind.

7. Vorrichtung nach Anspruch 6,
wobei das Dachgehäuse (16) für jede Seite (18, 19, 21) des Rahmens (17) eine entsprechende Wand (24, 26, 27) aufweist;
dadurch **gekennzeichnet,** daß
die Wände (24, 26, 27) mit einer Schicht (58) aus Abdeckmaterial beschichtet sind; daß die Schicht (58) einen Flansch (59) aufweist, der derart ausgebildet ist, daß er die Befestigungselemente (39) abdeckt; und daß der Flansch (59) eine Anzahl von Öffnungen (61) aufweist, die einen Zugang zu den Befestigungselementen (39) ermöglichen, und die jeweils durch einen entsprechenden entfernbaren Stopfen (62) verschlossen sind.

8. Vorrichtung nach Anspruch 7, wobei das Element (16) eine Luke (33) aufweist,
dadurch **gekennzeichnet,** daß
der Rahmen (17) mindestens eine Öffnung (67) für die Durchführung von Kabeln (64) für die in dem Gehäuse (16) vorgesehenen Einrichtungen aufweist;
daß die Kabel (64) zumindest teilweise in einem Kanal (66) zwischen einer (24) der Wände und der entsprechenden Abdeckungsschicht (58) untergebracht sind.

## Revendications

1. Un dispositif de fixation pour monter un élément de toit profilé sur le toit d'une cabine de véhicule industriel, dans lequel ledit élément de toit (16) comprend un châssis de base (17) comportant une partie sensiblement périphérique (36) agencée pour porter sur une partie correspondante (37) dudit toit (14); un joint d'étanchéité continu (38) étant prévu entre lesdites parties périphériques qui se font face (36, 37), et une pluralité d'éléments de fixation (39) étant prévus pour un nombre respectif de paires de sièges (43, 44), chaque paire comprenant un siège (43) dans ledit châssis (17) et un siège (44) dans ledit toit (14); caractérisé en ce que chacun desdits éléments de fixation (39) est de type à boulon (41) et écrou (42), logé à l'intérieur d'un tampon (46) en matériau élastomère fixé à l'intérieur de l'un (43) de ladite paire de sièges (43, 44).

2. Un dispositif selon la revendication 1, caractérisé en ce que chacune desdites paires de sièges comprend deux trous (43, 44); et chacun desdits tampons (46) est de forme cylindrique et présente un élément rapporté (47) en forme de bague métallique coaxiale audit tampon (46) et recevant ledit boulon (41) dudit élément de fixation (39).

3. Un dispositif selon la revendication 2, caractérisé en ce que ledit tampon (46) présente une rainure diamétrale (48) perpendiculaire à l'axe de ladite bague (47) et venant au contact du bord circulaire de l'un desdits trous (43, 44).

4. Un dispositif selon la revendication 3, caractérisé en ce que ledit trou (43) engagé par ledit tampon (46) est agencé dans ledit châssis (17); ledit écrou (42) de chacun desdits éléments de fixation (39) étant fixé sur le trou correspondant (44) dudit toit (14).

5. Un dispositif selon l'une quelconque des revendications précédentes, dans lequel ledit châssis (17) comprend, au moins, un côté avant (18) et deux côtés longitudinaux (19); caractérisé en ce que chacun desdits côtés (18, 19) comprend un bord en saillie (52) reposant sur un épaulement (53) dudit toit (14) avec l'interposition d'un joint (54) en matériau élastomère.

6. Un dispositif selon la revendication 5, caractérisé en ce que lesdits sièges (43) sont formés dans ledit châssis (17), entre ladite partie (36) et ledit bord (52).

7. Un dispositif selon la revendication 6, dans lequel ledit élément de toit (16) comprend une paroi respective (24, 26, 27) pour chaque côté (18, 19, 21) dudit châssis (17), caractérisé en ce que lesdites parois (24, 26, 27) sont garnies d'une couche (58) de matériau de recouvrement; ladite couche (58) comprenant une bride (59) agencée de manière à recouvrir lesdits éléments de fixation (39); et ladite bride (59) comprenant une pluralité d'ouvertures (61) donnant accès auxdits éléments de fixation (39) et fermées chacune par un bouchon amovible respectif (62).

8. Un dispositif selon la revendication 7, dans lequel ledit élément de toit (16) comporte une écoutille (33), caractérisé en ce que ledit châssis (17) présente, au moins, un trou (67) pour le passage de câbles (64) pour les accessoires prévus dans ledit élément de toit (16), lesdits câbles (64) étant au moins partiellement logés dans un conduit (66) entre l'une (24) desdites parois et la couche de recouvrement respective (58).
